# EUROPÄISCHE PATENTANMELDUNG

(11) **EP 2 090 597 A1**
(43) Veröffentlichungstag der Anmeldung: **19.08.2009**
(21) Anmeldenummer: 08101596.8
(22) Anmeldetag: 13.02.2008
(51) Int. Cl.: C08F 220/06, C08F 290/06

(54) **Wässrige Lösung enthaltend Copolymer mit Polyetherseitenketten**

(71) Anmelder: Construction Research and Technology GmbH, 83308 Trostberg (DE)
(72) Erfinder: Lorenz, Klaus, Dr., 84539, Zangberg (DE); Albrecht, Gerhard, Dr., 83342, Tacherting (DE); Mack, Helmut, Dr., 83278, Traunstein (DE); Kraus, Alexander, Dr., 83552, Evenhausen (DE); Flakus, Silke, Dr., 83308, Trostberg (DE); Wagner, Petra, 83308 Trostberg (DE); Scholz, Christian, 83308 Trostberg (DE); Wimmer, Barbara, 83342 Tacherting (DE); Hartl, Angelika, 83342 Emmertsham (DE); Winklbauer, Martin, 84553 Halsbach (DE)
(74) Vertreter: Arlt, Klaus

(57) **Zusammenfassung**

Die Erfindung betrifft ein Verfahren zur Herstellung einer wässrigen Lösung enthaltend 30 bis 95 Gew.-% Wasser und 5 bis 70 Gew.-% eines in dem Wasser gelösten Copolymers durch radikalische Lösungspolymerisationen von einem Isoprenolpolyetherderivat mit einem Acrylsäurederivat, so dass das Copolymer aufweist 20 bis 45 Mol-% einer Isoprenolpolyetherderivat-Struktureinheit und 55 bis 80 Mol-% einer Acrylsäurederivat-Struktureinheit. Die wässrige Lösung eignet sich als Fließmittel für hydraulische Bindemittel.

## Beschreibung

Die vorliegende Erfindung betrifft ein Verfahren zur Herstellung einer wässrigen Lösung sowie die wässrige Lösung.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/oder Säurederivatmonomeren mit Polyethermakromonomeren hergestellt werden. Die Copolymerisation wird zweckmäßigerweise als wässrige Lösungspolymerisation durchgeführt und die das Copolymer enthaltende wässrige Lösung als Wasserreduktions- bzw. Fließmittel eingesetzt.

In der WO 2005/075529 werden Copolymere beschrieben, welche neben Säuremonomer-Struktureinheiten als Polyethermakromonomer-Struktureinheiten Vinyloxybutylenpoly(ethylenglykol)-Struktureinheiten aufweisen. Wässrige Lösungen, die derartige Copolymertypen aufweisen, sind als Hochleistungsfließmittel weit verbreitet, da diese vorzügliche Anwendungseigenschaften aufweisen. In diesem Zusammenhang ist die Robustheit bzw. Universalität gegenüber der Verwendung verschiedener Zemente, unterschiedlichen Mischungsprozeduren sowie verschiedenen Anwendungstemperaturen besonders hervorzuheben. Der diese Hochleistungsfließmittel enthaltende Beton zeichnet sich normalerweise durch eine besonders gute Verarbeitbarkeit aus.

Das als monomeres Vorprodukt dieser Copolymere eingesetzte Vinyloxybutylenpoly(ethylenglykol) wird durch Ethoxylierung von 4-Hydroxybutylvinylether erhalten. 4-Hydroxybutylvinylether ist ein großtechnisches Folgeprodukt des Acetylens. Aufgrund der Tatsache, dass die auf Acetylen basierende Chemie (Reppe-Chemie) durch die auf Ethylen basierende Chemie weitestgehend abgelöst worden ist, ist die großtechnische Produktion von 4-Hydroxybutylvinylether an die wenigen noch Reppe-Chemie betreibenden Industriestandorte gebunden. Es ist außerdem regelmäßig davon auszugehen, dass 4-Hydroxybutylvinylether als Produkt der insbesondere aus sicherheitstechnischer Sicht aufwendigen Reppe-Chemie nicht besonders kostengünstig herstellbar ist bzw. sein wird. Das vorstehend gesagte wirkt sich entsprechend auch auf die Verfügbarkeit und die Kosten von Vinyloxybutylenpoly(ethylenglykol) sowie der entsprechenden Copolymere bzw. wässrigen Copolymerlösungen aus.

Die der vorliegenden Erfindung zugrunde liegende Aufgabe ist es somit, ein Verfahren zur Herstellung eines wirtschaftlichen Dispergiermittels für hydraulische Bindemittel bereitzustellen, welches sich insbesondere gut als Fließmittel/Wasserreduktionsmittel für Beton eignet.

Die Lösung dieser Aufgabe ist ein Verfahren zur Herstellung einer wässrigen Lösung enthaltend 30 bis 95 Gew.-% Wasser und 5 bis 70 Gew.-% eines in dem Wasser gelösten Copolymers durch radikalische Lösungspolymerisationen von einem Isoprenolpolyetherderivat mit einem Acrylsäurederivat, so dass das Copolymer aufweist
i) 20 bis 45 Mol-% einer Isoprenolpolyetherderivat-Struktureinheit α ) und
ii) 55 bis 80 Mol-% einer Acrylsäurederivat-Struktureinheit β),
wobei die Isoprenolpolyetherderivat-Struktureinheit α durch folgende allgemeine Formel (la) repräsentiert wird 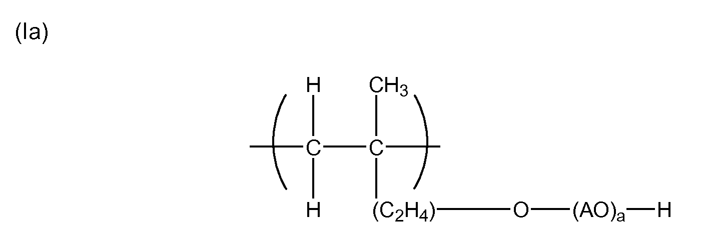 mit
A gleich oder verschieden sowie repräsentiert durch eine Alkylengruppe gemäß CₓH₂ₓ mit x = 2, 3, 4 oder 5,
a gleich oder verschieden und repräsentiert durch eine ganze Zahl zwischen 11 und 34,
die Acrylsäurederivat-Struktureinheit β durch folgende allgemeine Formeln (IIa) und/oder (IIb) repräsentiert wird 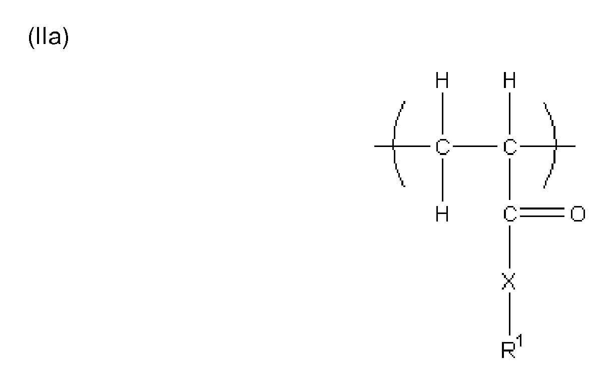 mit
X gleich oder verschieden und repräsentiert durch NH-(CₙH₂ₙ) mit n = 1, 2, 3 oder 4 oder repräsentiert durch O-(CₙH₂ₙ) mit n = 1, 2, 3 oder 4;
R¹ gleich oder verschieden und repräsentiert durch SO₃H, PO₃H₂, OPO₃H₂, und/oder C₆H₅-SO₃H 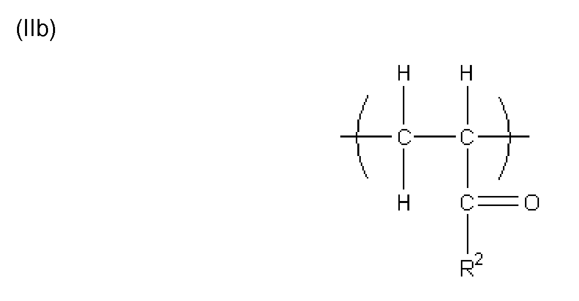 R² gleich oder verschieden und repräsentiert durch OH, OM mit M = Na, K, Ca und/oder ONH₄.

Die Bestimmung von a (Anzahl der Alkoxygruppen) in der Isoprenolpolyetherderivat-Struktureinheit α gemäß der allgemeinen Formel (la) erfolgt auf der Basis von so genannten MALDI-TOF-MS Messungen (MALDI-TOF-MS ist eine Abkürzung für Matrix Assisted Laser Desorption/Ionization Time Of Flight Massenspektroskopie). Die in diesem Zusammenhang durchgeführten MALDI-TOF-MS Messungen wurden auf einem " Bruker Reflex III", ausgestattet mit einem 337 nm Stickstofflaser, durchgeführt. Die Beschleunigungsspannung betrug 20 kV und die Detektion der Kationenspektren erfolgte im Reflektormodus. Als Matrix wurde Dihydroxybenzoesäure (DHB) und als Salz Kaliumchlorid der Merck KGaA eingesetzt. Die Probenpräparation erfolgte als Feststoffpräparation. Hierfür wurde jeweils eine Spatelspitze der entsprechenden Probe in THF gelöst. Ein kleiner Teil der gelösten Probe wurde anschließend mit einer Spatelspitze DHB und einer Spatelspitze Kaliumchlorid in einem Mörser verrieben. Ein Teil dieser Mischung wurde mit einem Spatel auf ein Probentarget aufgetragen. Die Kalibrierung erfolgte mit einem externen Standard, welcher sich aus folgenden Peptiden zusammensetzte (Pepmix): 10 pm/µ I radikinin,10 pm/µ I Angiotensin I,10 pm/µ I Angiotensin II,10 pm/µ I Neurotensin und10 pm/µ I ACTH. Die Peptide wurden in einem Gemisch aus 20 Gew.-% Acetonitril, 79,9 Gew.-% H₂O und 0,1 Gew.-% Ameisensäure gelöst. Der Pepmix wird zusätzlich mit H₂O verdünnt. Für die Kalibrierung wurde 1 µ I Pepmix mit 1 µ I DHB-Lösung auf einem Spot des Targets gemischt. Als Lösungsmittel für die DHB-Lösung wurde ein Methanol-Wasser Gemisch im Verhältnis 1:1 1 verwendet. Die Konzentration betrug 10 mg/ml.

Die Isoprenolpolyetherderivat-Struktureinheit α ist maßgeblich an der Dispergierwirkung des gelösten Copolymers beteiligt. Das Vorprodukt der entsprechenden monomeren Ausgangsverbindung ist Isoprenol (3-Methyl-3-buten-1-ol). Isoprenol ist ein Produkt der olefinischen Chemie, welches beispielsweise in großen Mengen als Zwischenprodukt bei der Citralsynthese anfällt. Allgemein kann gesagt werden, dass Isoprenol als ein in großen Mengen verfügbares und preisgünstiges Zwischenprodukt der chemischen Industrie angesehen werden kann. Daraus folgt eine entsprechend hohe wirtschaftliche Attraktivität der erfindungsgemäßen Copolymerlösung, für welche Isoprenol ein besonders wichtiges Ausgangsprodukt darstellt. Zusätzlich ist wesentlich, dass die erfindungsgemäßen Copolymere die vorzüglichen Anwendungseigenschaften der Hochleistungsfließmittel aufweisen, welche vorstehend beschrieben sind.

Schließlich sollte bezüglich der Herstellung der wässrigen Copolymerlösung (Polymerisationsprozess) erwähnt sein, dass alkoxyliertes Isoprenol aufgrund der besonderen hohen Resistenz gegenüber saurer Hydrolyse im Vergleich zu Vinyloxybutylenpoly(ethylenglykol) verfahrenstechnisch leichter handhabbar ist.

Bevorzugt enthält die wässrige Lösung 45 bis 65 Gew.-% Wasser und 35 bis 55 Gew.-% des in dem Wasser gelösten Copolymers. Dadurch wird der Stabilität der Lösung und der Wirtschaftlichkeit (Lagerkosten-, Transportkostenminimierung) insgesamt optimal Rechnung getragen.

Meist weist das Copolymer 25 bis 40 Mol-% der Isoprenolpolyetherderivat-Struktureinheit α) auf.

In der Regel weist das Copolymer 60 bis 75 Mol-% der Acrylsäurederivat-Struktureinheit β) auf.

Normalerweise gilt in der die Isoprenolpolyetherderivat-Struktureinheit α repräsentierenden allgemeinen Formel (la): a = 16 bis 28.

Üblicherweise wird in der die Isoprenolpolyetherderivat-Struktureinheit α) repräsentierenden allgemeinen Formel (la) x durch 2 und/oder 3, bevorzugt 2, repräsentiert.

In einer bevorzugten Ausführungsform der Erfindung wird als Acrylsäurederivat Acrylsäure als solches eingesetzt.

Oft weist das Copolymer ein gewichtsmittleres Molekulargewicht von 10.000 bis 100.000 auf.

Das gelöste Copolymer kann neben der Isoprenolpolyetherderivat-Struktureinheit α ) und der Acrylsäurederivat-Struktureinheit β) noch mindestens eine weitere Struktureinheit aufweisen. Dann wird beispielsweise als Comonomer Hydroxybutylvinylether eingesetzt, so dass das gelöste Copolymer mindestens aufweist 1 Mol-% einer Hydroxybutylvinylether-Struktureinheit µ, welche durch die allgemeinen Formel (IIIa) repräsentiert wird

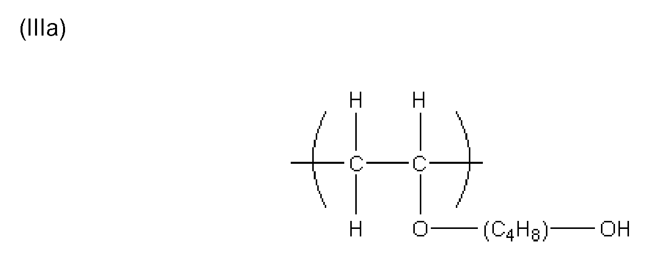

Typischerweise wird die radikalische Lösungspolymerisation in einem Temperaturbereich von 0 bis 40 °C in Anwesenheit eines Redoxinitiators durchgeführt.

Die wässrige Lösung wird bei deren Anwendung normalerweise mit einem hydraulischen Bindemittel und/oder einem latenthydraulischen Bindemittel vermischt.

In der Regel liegt das hydraulische Bindemittel als Zement, Kalk, Gips, Halbhydrat oder Anhydrit oder aus Mischungen dieser Komponenten, bevorzugt jedoch als Zement vor. Das latenthydraulische Bindemittel liegt normalerweise als Flugasche, Trass oder Hochofenschlacke vor.

Die Vorliegende Erfindung betrifft schließlich auch eine wässrige Lösung, welche gemäß dem vorstehend beschriebenen Verfahren herstellbar ist.

Die vorliegende Erfindung soll im Folgenden näher anhand von Ausführungsbeispielen beschrieben werden.

Es sollen erfindungsgemäße Copolymerlösungen (gemäß den Herstellunsbeispielen 1 und 2) mit Copolymerlösungen, welche bereits in der Praxis erfolgreich eingesetzt werden, (gemäß den Vergleichsbeispielen 1 und 2) bezüglich deren Performance verglichen werden.

### Herstellungsbeispiel 1 (Bsp. 1) - erfindungsgemäße Lösung mit Copolymertyp 1

Ein Glasreaktor ausgestattet mit mehreren Zulaufmöglichkeiten, Rührer und Tropftrichter wurde mit 143 ml Wasser und 165 g Macromonomer (hergestellt durch Ethoxylierung von 3-methyl-3-buten-1-ol mit 22 mol EO) beschickt (Lösung A) und auf 15,4 °C temperiert. Eine Teilmenge der zweiten vorbereiteten, teilneutralisierten Lösung (Lösung B), bestehend aus 61,05 g Wasser und 23,5 g Acrylsäure (90 %) wurden über einen Zeitraum von 15 min in den Glasreaktor zu Lösung A gegeben. Weiterhin wurden 1,11 g 3-Mercaptopropionsäure in den Reaktor gegeben. Eine 3. Lösung (Lösung C), bestehend aus 3g Natriumhydroxymethansulfinat-dihydrat und 47 g Wasser wurde vorbereitet. Darauf wurden bei einer Temperatur von 15,4 °C 46,5 mg Eisen-(II)-sulfat-Heptahydrat, gelöst in einigen Tropfen Wasser, sowie 2,87 g 30%ige Wasserstoffperoxidlösung zu Lösung A gegeben. Des Weiteren wurden über 45 Minuten die noch verbliebene Lösung B und über 50 Minuten Lösung C in die Lösung A dosiert. Zum Abschluss wurden - 25 ml 20%ige Natriumhydroxid-Lösung zugegeben und ein pH-Wert von 6,5 eingestellt.

Es wurde die wässrige Lösung eines Copolymers mit einem mittleren Molgewicht von Mw = 35400 g/mol, einer Polydispersität von 1,59 und einem Feststoffgehalt von 42,1 % erhalten. Die Ausbeute an Polymer im Vergleich zu nicht einpolymerisiertem ungesättigtem Alkoholethoxylat betrug 92 % (bestimmt durch Gelpermeationschromatographie, nachstehend als GPC bezeichnet).

### Herstellungsbeispiel 2 (Bsp. 2) - erfindungsgemäße Lösung mit Copolymertyp 2

Ein Glasreaktor ausgestattet mit mehreren Zulaufmöglichkeiten, Rührer und Tropftrichter wurde mit 110 ml Wasser und 165 g Macromonomer (hergestellt durch Ethoxylierung von 3-methyl-3-buten-1-ol mit 22 mol EO) beschickt (Lösung A) und auf 14 °C temperiert. Eine Teilmenge einer zweiten vorbereiteten, teilneutralisierten Lösung (Lösung B), bestehend aus 79 g Wasser und 30,4 g Acrylsäure (90 %) wurden über einen Zeitraum von 15 min in den Glasreaktor zu Lösung A gegeben. Weiterhin wurden 1,31 g 3-Mercaptopropionsäure in den Reaktor gegeben. Eine 3. Lösung (Lösung C), bestehend aus 3 g Natriumhydroxymethansulfinat-dihydrat und 47 g Wasser wurde vorbereitet. Darauf wurden bei einer Temperatur von 14 °C 46,5 mg Eisen-(II)-sulfat-Heptahydrat, gelöst in einigen Tropfen Wasser, sowie 2,87 g 30%ige Wasserstoffperoxidlösung zu Lösung A gegeben. Des Weiteren wurden über 45 Minuten die noch verbliebene Lösung B und über 75 Minuten Lösung C in die Lösung A dosiert. Zum Abschluss werden - 31 ml 20%ige Natriumhydroxid-Lösung zugegeben und ein pH-Wert von 6,5 eingestellt.

Es wurde die wässrige Lösung eines Copolymers mit einem mittleren Molgewicht von Mw = 32000 g/mol, einer Polydispersität von 1,65 und einem Feststoffgehalt von 42,7 % erhalten. Die Ausbeute an Polymer im Vergleich zu nicht einpolymerisiertem ungesättigtem Alkoholethoxylat betrug 93 % (bestimmt durch GPC).

### Vergleichsbeispiel 1 (Vgl. 1) - entsprechend zur Lösung mit Copolymertyp 1

Käufliches Betonfließmittel Glenium^{®} 115 (von BASF Construction Polymers GmbH) auf Basis eines Copolymerisats aus Vinyloxybutylenpoly(ethylenglykol), einer ethylenisch ungesättigten Carbonsäure und eines ethylenisch ungesättigten Dicarbonsäurederivats - das Polymer gemäß Vergleichsbeispiel 1 weist gegenüber dem Copolymertyp 1 eine eng verwandte Polymerarchitektur auf.

### Vergleichsbeispiel 2 (Vgl. 2) - entsprechend zur Lösung mit Copolymertyp 2

Käufliches Betonfließmittel Melflux^{®} 2320 (von BASF Construction Polymers GmbH) auf Basis eines Copolymerisats aus Vinyloxybutylenpoly(ethylenglykol), einer ethylenisch ungesättigten Carbonsäure und eines ethylenisch ungesättigten Dicarbonsäurederivats - das Polymer gemäß Vergleichsbeispiel 2 weist gegenüber dem Copolymertyp 2 eine eng verwandte Polymerarchitektur auf.

Es soll zunächst das Polymerisationsverhalten bezüglich erzielter Molekulargewichtsverteilung und Umsatz betrachtet werden. Aus Tabelle 1 geht hervor, dass die Herstellung der die Erfindung betreffenden gelösten Polymere mit jeweils etwas höheren Umsätzen erfolgt als die der Vergleichspolymere. Ein weiteres wichtiges Kriterium für eine gute Performance im Beton ist die mittlere Molmasse der gelösten Polymere.

**Tabelle 1: Molmassen und Umsätze der Copolymere**

| Polymer | M_{w} [g/mol] | Pd | Umsatz (%) |
|---|---|---|---|
| Bsp.1 | 35400 | 1,59 | 92 |
| Vgl.1 | 33200 | 1,56 | 87 |
| Bsp.2 | 32000 | 1,65 | 93 |
| Vgl.2 | 28500 | 1,49 | 87 |

In Tabelle 1 sind jeweils die Werte für M_{w} und für die Polydispersität (Pd) abgebildet. Beide erfindungsgemäßen Produkte weisen eine mittlere Molmasse im Bereich der Vergleichspolymere auf. Die Polydispersitäten liegen ebenfalls in einem vergleichbaren Bereich.

Zur weiteren Bewertung der Copolymerlösungen wurden Betontests durchgeführt. Die experimentellen Durchführungen sind in den Anwendungsbeispielen 1 und 2 beschrieben. Bei den Tests sollte geprüft werden, ob die erfindungsgemäßen Copolymerlösungen unter den gleichen Testbedingungen (w/z-Wert, Temperatur, Zuschläge, etc.) und bei gleicher Dosierung eine gute Performance, d.h. die gleiche Verflüssigung sowie das gleiche Fließmaß über die Zeit zeigen.

### Durchführung der Betontests:

280 kg Portlandzement (CEM I 42,5 R, Mergelstetten) wurden mit runden Zuschlägen, zusammengesetzt entsprechend der Fuller-Sieblinie mit einem Größtkorn von 16 mm, 80 kg Kalksteinmehl-Füller Calcit MS 12 und 156,8 kg Wasser, welches die erfindungsgemäßen Produkte bzw. die Vergleichsprodukte in gelöster Form enthielt, angerührt. Unmittelbar nach der Herstellung der Betonmischung erfolgten die Bestimmung des Ausbreitmaßes sowie dessen zeitliche Veränderung über einen Zeitraum von 60 Minuten.

### Die Ergebnisse der Prüfung sind nachstehend tabellarisch aufgeführt.

280 kg Portlandzement (CEM I 42,5 R, Karlstadt) wurden mit runden Zuschlägen, zusammengesetzt entsprechend der Fuller-Sieblinie mit einem Größtkorn von 16 mm, 80 kg Kalksteinmehl-Füller Calcit MS 12 und 162,4 kg Wasser, welches die erfindungsgemäßen Produkte bzw. die Vergleichsprodukte in gelöster Form enthielt, angerührt. Unmittelbar nach der Herstellung der Betonmischung erfolgten die Bestimmung des Ausbreitmaßes sowie dessen zeitliche Veränderung über einen Zeitraum von 60 Minuten.

### Die Ergebnisse sind in den nachstehenden Tabellen aufgezeigt.

**Tabelle 2:**

| Zusatzmittel | Feststoff [Gew.-%] | Dosierung [Gew.-%] | Fließmaß in cm nach | | | |
|---|---|---|---|---|---|---|
| | | | 0 min. | 10 min. | 30 min. | 60 min. |
| Bsp.1 | 30 | 0,14 | 63,5 | 57,5 | 51,5 | 48,5 |
| Vgl.1 | 30 | 0,14 | 63 | 57,5 | 51,5 | 47,5 |
| Bsp.2 | 30 | 0,13 | 62,5 | 57,5 | 51 | 47 |
| Vgl.2 | 30 | 0,13 | 62,5 | 59 | 53,5 | 47,5 |
| w/z = 0,56; Zement: Mergelstetten | | | | | | |

Tabelle 2 zeigt die Ergebnisse der Betontests unter Verwendung von Mergelstettenzement. Für beide Beispielpolymere kann bei gleicher Dosierung eine nahezu identische Verflüssigung beobachtet werden. Zudem ist die Entwicklung des Fließmaßes über 60 Minuten vergleichbar mit den Referenzpolymeren. Auch der Test unter Verwendung des Karlstädter Zements zeigt ein nahezu identisches Verhalten der Beispielpolymere mit ihren Referenzen (Tabelle 3).

**Tabelle 3:**

| Zusatzmittel | Feststoff [Gew.-%] | Dosierung [Gew.-%] | Fließmaß in cm nach | | | |
|---|---|---|---|---|---|---|
| | | | 0 min. | 10 min. | 30 min. | 60 min. |
| Bsp.1 | 30 | 0,14 | 59,5 | 59,5 | 54,5 | 50,5 |
| Vgl.1 | 30 | 0,14 | 59 | 60 | 57,5 | 51,5 |
| Bsp.2 | 30 | 0,13 | 65,5 | 61,5 | 54,5 | 51,5 |
| Vgl.2 | 30 | 0,13 | 65 | 64 | 53,5 | 50,5 |
| w/z = 0,57 für Bsp. 1 und 0,58 für Bsp. 2; Zement: Karlstadt | | | | | | |

Die Ergebnisse zeigen, dass die erfindungsgemäßen Copolymerlösungen bezüglich ihres Verhaltens im Beton vergleichbare Eigenschaften wie die bekannten Hochleistungsfließmittel aufweisen. Darüber hinaus wird durch die Verwendung verschiedener Zemente auch die Robustheit/ Universalität der die Erfindung betreffenden Copolymere bestätigt.

**Tabelle 4:**

| Zusatzmittel | Feststoff [Gew.-%] | Dosierung [Gew.-%] | Slump-Flow in cm nach | | | |
|---|---|---|---|---|---|---|
| | | | 0 min. | 10 min. | 30 min. | 60 min. |
| Bsp.1 | 30 | 0,14 | 39 | 32 | 25,5 | 22,5 |
| Vgl.1 | 30 | 0,14 | 37,5 | 33,5 | 27,5 | 24 |
| w/z = 0,56; Zement: Mergelstetten | | | | | | |

Tabelle 4 zeigt die Ergebnisse für den Slump-Flow anhand von Beispiel 1 und dem entsprechenden Vergleichspolymer. Unter Verwendung der gleichen Dosierung ist auch hier ein vergleichbares Verhalten zu beobachten. Dies ist eine weitere Bestätigung dafür, dass durch den Zusatz der die Erfindung betreffenden Copolymere ein Beton entsteht, der eine vergleichbare Konsistenz und eine ebenso gute Verarbeitbarkeit aufweist, wie es bei Einsatz der als Referenz hinzugezogenen erfolgreichen Hochleistungsfließmittel der Fall ist.

### Gesamtfazit der Ergebnisse der Vergleichsversuche:

Die vorstehenden Versuche zeigen, dass die Qualität der Fließmittel auf Basis der die Erfindung betreffenden Copolymere hervorragend ist. Die Performance ist vergleichbar mit den sich bereits in der Praxis bewährten Hochleistungspolymeren auf Basis von Vinyloxybutylenpoly(ethylenglykol).

## Patentansprüche

1. Verfahren zur Herstellung einer wässrigen Lösung enthaltend 30 bis 95 Gew.-% Wasser und 5 bis 70 Gew.-% eines in dem Wasser gelösten Copolymers durch radikalische Lösungspolymerisationen von einem Isoprenolpolyetherderivat mit einem Acrylsäurederivat, so dass das Copolymer aufweist
i) 20 bis 45 Mol-% einer Isoprenolpolyetherderivat-Struktureinheit α ) und
ii) 55 bis 80 Mol-% einer Acrylsäurederivat-Struktureinheit β ),
wobei die Isoprenolpolyetherderivat-Struktureinheit α durch folgende allgemeine Formel (la) repräsentiert wird 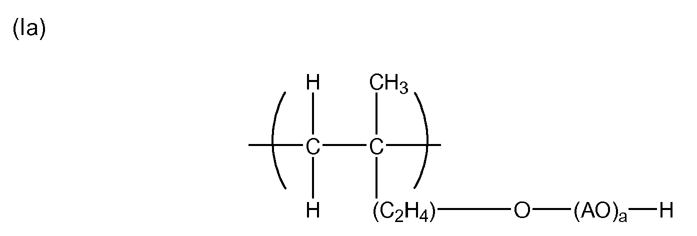 mit
A gleich oder verschieden sowie repräsentiert durch eine Alkylengruppe gemäß CₓH₂ₓ mit x = 2, 3, 4 oder 5,
a gleich oder verschieden und repräsentiert durch eine ganze Zahl zwischen 11 und 34,
die Acrylsäurederivat-Struktureinheit β durch folgende allgemeine Formeln (IIa) und/oder (IIb) repräsentiert wird 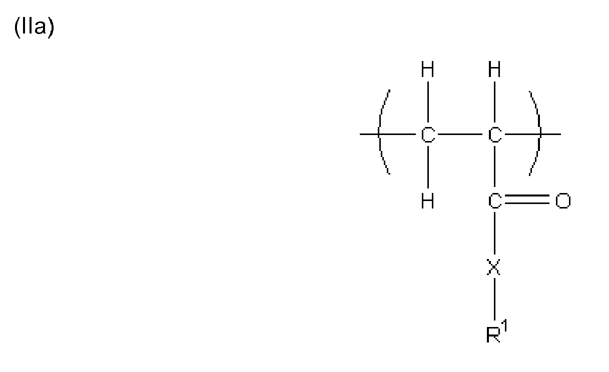 mit
X gleich oder verschieden und repräsentiert durch NH-(CₙH₂ₙ) mit n = 1, 2, 3 oder 4 oder repräsentiert durch O-(CₙH₂ₙ) mit n = 1, 2, 3 oder 4;
R¹ gleich oder verschieden und repräsentiert durch SO₃H, PO₃H₂, OPO₃H₂, und/oder C₆H₅-SO₃H 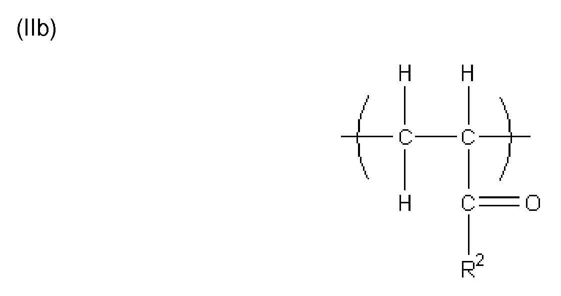 R² gleich oder verschieden und repräsentiert durch OH, OM mit M = Na, K, Ca und/oder ONH₄.

2. Verfahren nach Anspruch 1, **dadurch gekennzeichnet, dass** die wässrige Lösung 45 bis 65 Gew.-% Wasser und 35 bis 55 Gew.-% des in dem Wasser gelösten Copolymers enthält.

3. Verfahren nach Anspruch 1 oder 2, **dadurch gekennzeichnet, dass** das Copolymer 25 bis 40 Mol-% der Isoprenolpolyetherderivat-Struktureinheit α ) aufweist.

4. Verfahren nach einem der Ansprüche 1 bis 3, **dadurch gekennzeichnet, dass** das Copolymer 60 bis 75 Mol-% der Acrylsäurederivat-Struktureinheit β) aufweist.

5. Verfahren nach einem der Ansprüche 1 bis 4, **dadurch gekennzeichnet, dass** a = 16 bis 28.

6. Verfahren nach einem der Ansprüche 1 bis 5, **dadurch gekennzeichnet, dass** das in der die Isoprenolpolyetherderivat-Struktureinheit α ) repräsentierenden allgemeinen Formel (la) x durch 2 und/oder 3, bevorzugt 2 repräsentiert wird.

7. Verfahren nach einem der Ansprüche 1 bis 6, **dadurch gekennzeichnet, dass** als Acrylsäurederivat Acrylsäure als solches eingesetzt wird.

8. Verfahren nach einem der Ansprüche 1 bis 7, **dadurch gekennzeichnet, dass** das Copolymer ein gewichtsmittleres Molekulargewicht von 10.000 bis 100.000 aufweist.

9. Verfahren nach einem der Ansprüche 1 bis 7, **dadurch gekennzeichnet, dass** das gelöste Copolymer neben der Isoprenolpolyetherderivat-Struktureinheit α) und der Acrylsäurederivat-Struktureinheit β) noch mindestens eine weitere Struktureinheit aufweist.

10. Verfahren nach Anspruch 9, **dadurch gekennzeichnet, dass** als Comonomer Hydroxybutylvinylether eingesetzt wird, so dass das gelöste Copolymer mindestens aufweist 1 Mol-% einer Hydroxybutylvinylether-Struktureinheit µ, welche durch die allgemeinen Formel (IIIa) repräsentiert wird

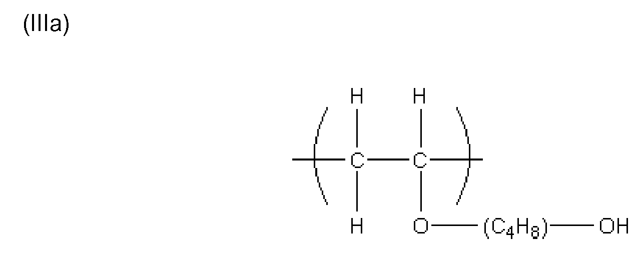

11. Verfahren nach einem der Ansprüche 1 bis 10, **dadurch gekennzeichnet, dass** die radikalische Lösungspolymerisation in einem Temperaturbereich von 0 bis 40 °C in Anwesenheit eines Redoxinitiators durchgeführt wird.

12. Verfahren nach einem der Ansprüche 1 bis 11, **dadurch gekennzeichnet, dass** die wässrige Lösung mit einem hydraulischen Bindemittel und/oder einem latenthydraulischen Bindemittel vermischt wird.

13. Verfahren nach Anspruch 12, **dadurch gekennzeichnet, dass** das hydraulische Bindemittel als Zement, Kalk, Gips, bevorzugt als Zement vorliegt.

14. Verfahren nach Anspruch 12, **dadurch gekennzeichnet, dass** das latenthydraulische Bindemittel als Flugasche, Trass oder Hochofenschlacke vorliegt.

15. Wässrige Lösung herstellbar gemäß dem Verfahren nach einem der Ansprüche 1 bis 14.
